# EUROPÄISCHE PATENTSCHRIFT

(11) **EP 3 821 157 B1**
(45) Veröffentlichungstag und Bekanntmachung des Hinweises auf die Patenterteilung: **11.12.2024**
(21) Anmeldenummer: 19712515.6
(22) Anmeldetag: 07.03.2019
(51) Int. Cl.: F16J 13/14, F16L 55/136

(54) **KOMBINATION EINES DECKELS UND EINES GEHÄUSES**
COMBINATION OF A COVER AND A HOUSING
COMBINAISON D'UN COUVERCLE ET UN BOÎTIER

(30) Priorität: 10.07.2018 DE 102018211436
(43) Veröffentlichungstag der Anmeldung: 19.05.2021
(73) Patentinhaber: Robert Bosch GmbH, 70442 Stuttgart (DE)
(72) Erfinder: WEH, Andreas, 87477 Sulzberg (DE); HAGSPIEL, Martin, 87549 Rettenberg (DE); KASERER, Stefan, 87527 Ofterschwang (DE); BREYER, Florian, 87534 Oberstaufen (DE); FRANKE, Tobias, 87547 Missen (DE)
(86) Internationale Anmeldenummer: PCT/EP2019/055692
(87) Internationale Veröffentlichungsnummer: WO 2020/011405

(56) Entgegenhaltungen:
- EP-A2- 0 133 455
- EP-B1- 0 133 455
- WO-A1-2018/121913
- SU-A1- 1 569 478
- US-A- 3 429 476
- US-A- 3 479 068

## Beschreibung

Die Erfindung betrifft eine Kombination eines Deckels und eines Gehäuses mit Merkmalen des Oberbegriffs des Anspruchs 1.

### Stand der Technik

Aus der US 3,479,068 A ist ein Aggregat aus einem Hauptzylinder und einem Reservoir für ein hydraulisches Druckmittel bekannt. Das Reservoir hat einen zapfenförmigen Vorsprung, mit dem es in einer Aufnahme am Hauptzylinder aufgenommen ist. Hauptzylinder und Reservoir sind durch einen elastischen Ring fest miteinander verbunden, welcher in einander gegenüberliegenden Nuten am Außenumfang des Vorsprungs und an der Innenumfangswand der Aufnahme angeordnet ist. Eine in Einbringrichtung des Deckels vordere Nutflanke der Nut der Aufnahme verläuft von innen nach außen schräg in der Einbringrichtung, während die Nutflanken der Nut am Vorsprung rechtwinklig zur Einbringrichtung des Deckels verlaufen.

Die europäische Patentanmeldung EP 0 133 455 A2 offenbart einen Verschluss mit einem Deckel, der einen axial kurzen, rohrförmigen Kragen aufweist, der in eine Öffnung eines Behälters aus Kunststoff ragt. Zwischen dem Kragen und einer Innenumfangsfläche der Öffnung des Behälters ist ein Klemmring aus einem weichelastischen Gummi angeordnet, der durch ein Übermaß zwischen dem Kragen des Deckels und der Innenumfangsfläche der Öffnung des Behälters eingespannt ist und den Deckel durch Reibschluss mit dem Behälter verbindet. Der Kragen des Deckels weist außen eine umlaufende Kegelfläche auf, die den gummielastischen Klemmring radial nach außen gegen die Innenumfangsfläche der Öffnung des Behälters spannt, wenn eine auswärts gerichtete Kraft auf den Deckel ausgeübt wird. Eine Spannkraft, mit der der Deckel den Klemmring radial nach außen spannt, ist umso größer, je höher die auswärts gerichtete Kraft auf den Deckel ist, so dass sich der Deckel nicht zerstörungsfrei vom Behälter abnehmen lässt.

Das Patent US 3,429,476 offenbart einen Verschluss eines Behälters mit einem Deckel mittels eines Spannrings, der aus zwei Halbringen besteht, die mit Spannmechanismen in entgegengesetzte Richtungen auseinander gespannt und zusammen gezogen werden können. Die beiden Spannmechanismen sind an gegenüberliegenden Umfangsstellen des Spannrings angeordnet und weisen jeweils zwei Hebelpaare und einen Schraubenspanner auf. Die Halbringe liegen in einer umlaufenden Nut außen in dem Deckel ein und lassen sich mit den beiden Spannmechanismen so weit in entgegengesetzte Richtungen nach außen spannen, dass sie in eine umlaufende Nut in einer Innenumfangsfläche einer Öffnung des Behälters greifen und dadurch den Deckel mit dem Behälter verbinden.

Die russische Patentanmeldung SU 1 569 478 A1 offenbart eine Befestigung eines Verschlusses in einem Ende eines Hydraulikzylinders, wobei der Verschluss eine axiale Durchführung für eine Kolbenstange aufweist. Zu seiner Befestigung weist der Verschluss eine umlaufende Ringstufe an seinem Außenumfang und der Zylinder der Ringstufe gegenüber eine umlaufende Nut in seinem Innenumfang auf, in der ein radial gewellter und federnder Verbindungsring einliegt derart, dass nach außen gerichtete Wellen des Verbindungsrings in die umlaufende Nut im Ende des Zylinders und nach innen gerichtete Wellen des Verbindungsrings die Ringstufe des Verschlusses hintergreifen.

### Offenbarung der Erfindung

Die erfindungsgemäße Kombination mit den Merkmalen des Anspruchs 1 weist einen Deckel und ein Gehäuse auf, wobei das Gehäuse eine Vertiefung als Aufnahme für den Deckel aufweist, in die der Deckel vollständig oder vorzugsweise ein Stück weit in einer Einbringrichtung eingebracht ist und aus der der Deckel vorstehen kann. Das Einbringen des Deckels in die Aufnahme des Gehäuses kann auch als Stecken des Deckels in die Aufnahme des Gehäuses aufgefasst werden. Eine Innenumfangswand der Aufnahme des Gehäuses für den Deckel verläuft in der Einbringrichtung. Insbesondere ist die Innenumfangswand der Aufnahme zylindrisch, sie kann allerdings auch einen anderen runden und/oder eckigen Querschnitt aufweisen, der über eine Tiefe der Aufnahme konstant in Form und Größe ist.

Der Deckel weist außen eine umlaufende Nut und die Aufnahme weist innen eine umlaufende Nut in ihrer Innenumfangswand auf. Die Nuten liegen einander gegenüber, wenn der Deckel am Gehäuse befestigt ist, wobei die Nuten etwas Versatz in der Einbringrichtung aufweisen können. In den Nuten ist ein Verbindungsring angeordnet, der zur Herstellbarkeit der Befestigung in radialer Richtung federt. Der Verbindungsring greift sowohl nach innen in die Nut des Deckels als auch nach außen in die Nut in der Innenumfangswand der Aufnahme des Gehäuses für den Deckel und verbindet den Deckel mit dem Gehäuse durch Anlage an einander in der Einbringrichtung gegenüberliegenden Nutflanken der beiden Nuten.

Erfindungsgemäß verlaufen eine in der Einbringrichtung vordere Nutflanke der Nut des Deckels und eine in der Einbringrichtung hintere Nutflanke der Nut in der Innenumfangswand der Aufnahme des Gehäuses für den Deckel von innen nach außen schräg in der Einbringrichtung, wobei die in der Einbringrichtung vordere Nutflanke der Nut des Deckels einen stumpferen Kegelwinkel aufweist als die in der Einbringrichtung hintere Nutflanke der Nut in der Innenumfangswand der Aufnahme des Gehäuses für den Deckel.

Der Verlauf der vorderen Nutflanke der Nut des Deckels von innen nach außen schräg in der Einbringrichtung des Deckels in die Aufnahme beaufschlagt den Verbindungsring radial nach außen im Sinne einer Aufweitung des Verbindungsrings, wenn der Deckel auf ein Lösen aus der Aufnahme beaufschlagt wird. Entgegengesetzt beaufschlagt der Verlauf der hinteren Nutflanke in der Innenumfangswand der Aufnahme des Gehäuses für den Deckel von innen nach außen schräg in der Einbringrichtung des Deckels in die Aufnahme den Verbindungsring radial nach innen im Sinne einer Durchmesserverkleinerung. Durch die einander entgegengerichtete Beaufschlagung des Verbindungsrings durch die Nutflanken der Nuten des Deckels und in der Innenumfangswand der Aufnahme wird der Verbindungsring so in diesen beiden Nuten gehalten, dass er auch bei hohem Druck in der Aufnahme und im Deckel in beide Nuten ragt und an beiden Nutflanken anliegt, so dass der Deckel sicher in der Aufnahme gehalten ist.

Die Erfindung ist insbesondere für Befestigungen mit einem Durchmesser der Aufnahme von etwa 26 mm und mehr vorgesehen, weil ab etwa einem solchen Durchmesser eine Befestigung und Abdichtung durch Verstemmen an einer Mündung der Aufnahme eine zu hohe Umformkraft erfordert.

Die Erfindung ermöglicht eine Befestigung des Deckels an dem Gehäuse, die einfach und schnell herstellbar ist, indem der Deckel in die Aufnahme des Gehäuses eingebracht wird. Außerdem ermöglicht die Erfindung eine mechanisch stabile Befestigung des Deckels an dem Gehäuse, die hohen, der Einbringrichtung entgegen gerichteten Lösekräften widersteht.

Die abhängigen Ansprüche haben Weiterbildungen und vorteilhafte Ausgestaltungen der im unabhängigen Anspruch angegebenen Erfindung zum Gegenstand.

Die Erfindung ist insbesondere für einen Hydraulikblock eines Hydraulikaggregats einer Bremsdruckregelung einer hydraulischen Fahrzeugbremsanlage vorgesehen. Dort ist der Deckel an beispielsweise einem Sackloch befestigt, das beispielsweise der Aufnahme eines Pedalwegsimulators, eines Hydrospeichers oder einer Dämpferkammer dient. Ein solcher Hydraulikblock dient einer mechanischen Befestigung und hydraulischen Verschaltung von Bauelementen der Bremsdruckregelung wie Magnetventilen, eines Pedalwegsimulators, Hydrospeichern, Dämpferkammern und weiteren Bauelementen. Verschaltung meint eine hydraulische Verbindung der Bauelemente entsprechend einem hydraulischen Schaltplan der Bremsdruckregelung. Bestückt mit den Bauelementen der Bremsdruckregelung bildet der Hydraulikblock das Hydraulikaggregat der Bremsdruckregelung. Er wird mit Bremsleitungen an einen Hauptbremszylinder und es werden hydraulische Radbremsen ebenfalls mit Bremsleitungen an den Hydraulikblock bzw. an das Hydraulikaggregat angeschlossen.

Mit "Bremsdruckregelung" ist beispielsweise eine Regelung eines hydraulischen Bremsdrucks bei einer Fremdkraftbremsung und/oder einer Schlupfregelung gemeint. Schlupfregelungen sind beispielsweise eine Blockierschutzregelung, Antriebsschlupfregelung und eine Fahrdynamikregelung gemeint, wobei letztere auch als elektronisches Stabilitätsprogramm und umgangssprachlich oft als Schleuderschutzregelung bezeichnet wird. Für diese Schlupfregelungen sind die Abkürzungen ABS, ASR, FDR und ESP gebräuchlich. Solche Bremsdruckregelungen sind bekannt und werden hier nicht weiter erläutert.

### Kurze Beschreibung der Zeichnung

Die Erfindung wird nachfolgend anhand einer in der Zeichnung dargestellten Ausführungsform näher erläutert. Es zeigen:
- Figur 1: eine erfindungsgemäße Kombination im Achsschnitt;
- Figur 2: eine vergrößerte Darstellung der Kombination;
- Figuren 3 und 4: zwei Zustände während einer Herstellung der Kombination; und
- Figur 5: einen Achsschnitt einer zweiten Ausführungsform einer erfindungsgemäßen Kombination.

### Ausführungsformen der Erfindung

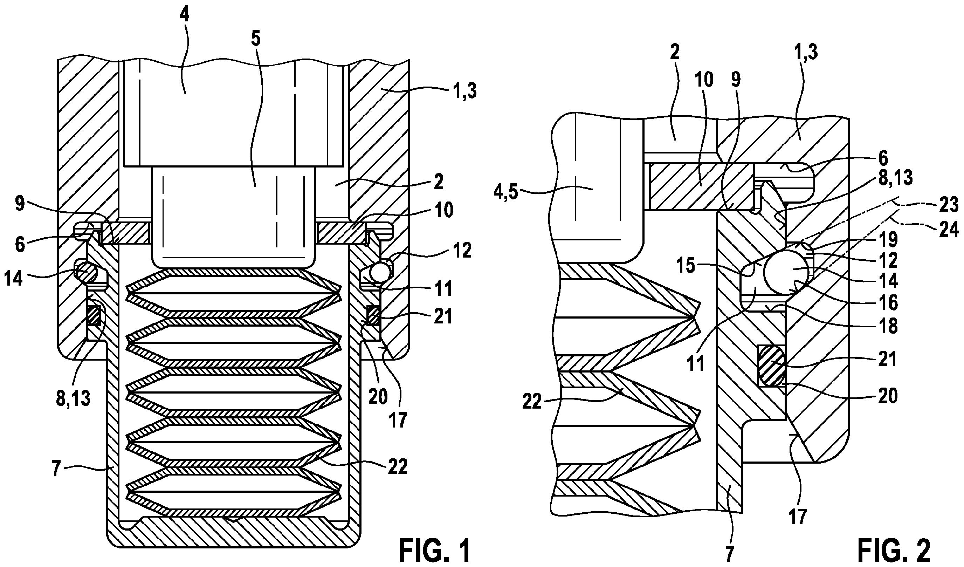

Figur 1 zeigt einen Ausbruch eines Hydraulikblocks 1 eines Hydraulikaggregats einer Bremsdruckregelung einer hydraulischen Fahrzeugbremsanlage im Bereich eines sogenannten Pedalwegsimulators. Der Hydraulikblock 1 weist ein zylindrisches Sackloch 2 als Aufnahme eines Kolbens 4 des Pedalwegsimulators auf. Anstelle des Pedalwegsimulators können in dem Sackloch 2 beispielsweise auch ein Hydrospeicher und/oder eine Dämpferkammer angeordnet sein. Die Aufzählung ist beispielhaft und nicht abschließend. Der Hydraulikblock 1 kann auch als Gehäuse 3 des Pedalwegsimulators, Hydrospeichers oder der Dämpferkammer und allgemein als Gehäuse 3 aufgefasst werden. Der Kolben 4 weist einen zylindrischen Fortsatz 5 mit einem kleineren Durchmesser an einem einer Mündung des Sacklochs 2 zugewandten Ende auf.

Zu der Mündung hin erweitert sich das Sackloch 2 mit einer Ringstufe auf einen größeren Durchmesser. Die Ringstufe bildet einen Tiefenanschlag 6 für einen Deckel 7. Ein durchmessergrößerer Abschnitt des Sacklochs 2 zwischen der Ringstufe und der Mündung des Sacklochs 2 bildet eine Vertiefung im Hydraulikblock 1 und eine Aufnahme 8 für den Deckel 7 im Hydraulikblock 1, der das Gehäuse 3 einer erfindungsgemäßen Kombination bildet.

Der Deckel 7 ist ein napfförmiger, zylindrischer Hohlkörper mit einem geschlossenen und einem offenen Ende, wobei sich das offene Ende in der Aufnahme 8 des das Gehäuse 3 bildenden Hydraulikblocks 1 befindet. Das geschlossene Ende des Deckels 7 steht aus dem Hydraulikblock 1 vor. In dem Deckel 7 befindet sich ein Tellerfederpaket 22 als Kolbenfeder, das sich innen am geschlossenen Ende des Deckels 7 abstützt und den Kolben 4 in das Sackloch 2 beaufschlagt.

Zwischen einem Stirnrand 9 am offenen Ende des Deckels 7 und der den Tiefenanschlag 6 bildenden Ringstufe des Sacklochs 2 ist eine Lochscheibe 10 angeordnet, die den Kolben 4 im Sackloch 2 hält. Der Fortsatz 5 des Kolbens 4 ragt durch die Lochscheibe 10 durch. Der Stirnrand 9 am offenen Ende des Deckels 7 wird hier auch als vorderer Stirnrand 9 bzw. als in einer Einbringrichtung des Deckels 7 in die Aufnahme 8 des das Gehäuse 3 bildenden Hydraulikblocks 1 vorderer Stirnrand 9 des Deckels 7 bezeichnet.

Mit etwas Abstand vom vorderen Stirnrand 9 weist der Deckel 7 außen eine umlaufende Nut 11 auf. Der Abstand der der Nut 11 vom vorderen Stirnrand 9 beträgt wenige Millimeter bzw. einen Bruchteil eines Durchmessers des Deckels 7.

Der Nut 11 des Deckels 7 gegenüber weist die Aufnahme 8 für den Deckel 7 eine ebenfalls umlaufende Nut 12 in einer Innenumfangswand 13 auf. Die Nut 12 in der Innenumfangswand 13 der Aufnahme 8 ist gegenüber der Nut 11 außen im Deckel 7 ein wenig in Richtung des Tiefenanschlags 6 versetzt, allerdings so, dass die beiden Nuten 11, 12 einander überdecken.

In den Nuten 11, 12 ist ein in radialer Richtung federnder Verbindungsring 14 angeordnet, der sowohl nach innen in die Nut 11 des Deckels 7 als auch nach außen in die Nut 12 in der Innenumfangswand 13 der Aufnahme 8 greift und dadurch den Deckel 7 in der Aufnahme 8 hält. Der Verbindungsring 14 ist ein an einer Umfangsstelle offener Kreisring mit kreisförmigem Ringquerschnitt, wobei andere offene oder geschlossene Verbindungsringe möglich sind. Der Verbindungsring 14 kann einen anderen als einen kreisförmigen Ringquerschnitt aufweisen und/oder eine in einer Umfangsrichtung verlaufende, radiale Wellung zum radialen Federn aufweisen (nicht dargestellt).

Wie insbesondere in der Vergrößerung der Figur 2 zu sehen, sind eine in der Einbringrichtung des Deckels 7 in die Aufnahme 8 des das Gehäuse 3 der erfindungsgemäßen Kombination bildenden Hydraulikblocks 1 vordere Nutflanke 15 der Nut 11 außen im Deckel 7 und eine in der Einbringrichtung hintere Nutflanke 16 der Nut 12 in der Innenumfangswand 13 der Aufnahme 8 Kegelstumpfflächen, das heißt die in der Einbringrichtung Nutflanken 15, 16 der Nuten 11, 12 des Deckels 7 und der Aufnahme 8 für den Deckel 7 verlaufen schräg von innen nach außen in der Einbringrichtung. Die in der Einbringrichtung des Deckels 7 in die Aufnahme 8 vordere Nutflanke 15 der Nut 11 des Deckels 7 befindet sich auf einer dem vorderen Stirnrand 9 am offenen Ende des Deckels 7 nahen Seite der Nut 11. Die hintere Nutflanke 16 der Nut 12 in der Innenumfangswand 13 der Aufnahme 8 befindet sich auf einer der Mündung der Aufnahme 8 nahen Seite der Nut 12. Die Nutflanken 15, 16 der Nuten 11, 12 sind die Nutflanken 15, 16, an denen der Verbindungsring 14 der erfindungsgemäßen Kombination anliegt, wenn der Deckel 7 beispielsweise durch einen Innendruck im Sackloch 2 und im Deckel 7 auf Lösen aus der Aufnahme 8 beaufschlagt wird.

Die Kegelstumpfform der vorderen Nutflanke 15 der Nut 11 außen im Deckel 7 bzw. der Verlauf dieser Nutflanke 15 von innen nach außen schräg in der Einbringrichtung des Deckels 7 in die Aufnahme 8 beaufschlagt den Verbindungsring 14 radial nach außen im Sinne einer Aufweitung des Verbindungsrings 14, wenn der Deckel 7 auf ein Lösen aus der Aufnahme 8 beaufschlagt wird. Entgegengesetzt beaufschlagt die Kegelstumpfform der hinteren Nutflanke 16 der Nut 12 in der Innenumfangswand 13 der Aufnahme 8 bzw. der Verlauf dieser Nutflanke 16 von innen nach außen schräg in der Einbringrichtung des Deckels 7 in die Aufnahme 8 den Verbindungsring 14 radial nach innen im Sinne einer Durchmesserverkleinerung. Durch die einander entgegengerichtete Beaufschlagung des Verbindungsrings 14 durch die Nutflanken 15, 16 der Nuten 11, 12 des Deckels 7 und in der Innenumfangswand 13 der Aufnahme 8 wird der Verbindungsring 14 so in diesen beiden Nuten 11, 12 gehalten, dass er auch bei hohem Druck im Sackloch 2 und im Deckel 7 in beide Nuten 11, 12 ragt und an beiden Nutflanken 15, 16 anliegt, so dass der Deckel 7 sicher in der Aufnahme 8 gehalten ist.

Die Befestigung des Deckels 7 in der Aufnahme 8 des das Gehäuse 3 bildenden Hydraulikblocks 1 ist unlösbar, das heißt der Deckel 7 lässt sich nur durch eine Beschädigung oder Zerstörung der Aufnahme 8 und/oder des Deckels 7 aus der Aufnahme 8 lösen.

Außerdem sorgen die von innen nach außen schräg in der Einbringrichtung des Deckels 7 in die Aufnahme 8 verlaufenden, kegelstumpfförmigen Nutflanken 15, 16 dafür, dass der vordere Stirnrand 9 des Deckels 7 an der Lochscheibe 10 und die Lochscheibe 10 am Tiefenanschlag 6 der Aufnahme 8 für den Deckel 7 anliegt. Das heißt, die kegelstumpfförmigen Nutflanken 15, 16 bewirken auch bei Durchmessertoleranzen des Deckels 7 im Bereich der Nut 11 und der Aufnahme 8 eine axial spielfreie Befestigung des Deckels 7 in der Aufnahme 8. Bei einem aufgrund von Toleranz großen Durchmesser des Deckels 7 und/oder der Aufnahme 8 weitet die vordere Nutflanke 15 der Nut 11 des Deckels 7 den in radialer Richtung federnden Verbindungsring 14 auf und bei einem aufgrund von Toleranz kleinen Durchmesser des Deckels 7 und/oder der Aufnahme 8 verkleinert die hintere Nutflanke 16 der Nut 12 in der Innenumfangswand 13 der Aufnahme 8 den Durchmesser des Verbindungsrings 14, so dass der Verbindungsring 14 immer in beide Nuten 11, 12 ragt und der vordere Stirnrand 9 des Deckels 7 an der Lochscheibe 10 und die Lochscheibe 10 am Tifefenanschlag 6 in der Aufnahme 8 anliegt.

Die Nutflanken 15, 16 der beiden Nuten 11, 12 sind unterschiedlich schräg, und zwar ist die vordere Nutflanke 15 der Nut 11 außen im Deckel 7 flacher, das heißt sie weist einen stumpferen Kegelwinkel als die hintere Nutflanke 16 der Nut 12 in der Aufnahme 8 für den Deckel 7 auf. Die unterschiedlichen Schrägen der Nutflanken 15, 16 der beiden Nuten 11, 12 ist in Figur 2 mit den beiden strichpunktierten Mantellinien 23, 24 der Nutflanken 15, 16 veranschaulicht. Die flachere vordere Nutflanke 15 der Nut 11 außen im Deckel 7 beaufschlagt den Verbindungsring 14 nach außen im Sinne einer Aufweitung des Verbindungsrings 14. Weist der Verbindungsring 14 wie in der dargestellten und beschriebenen Ausführungsform einen kreisförmigen Ringquerschnitt auf, kann er eventuell auf den schrägen Nutflanken 15, 16 der beiden Nuten 11,12 wälzen; ansonsten gleitet er auf den Nutflanken 15, 16 oder er führt eine kombinierte Gleit- und Wälzbewegung auf den Nutflanken 15, 16 aus. Bei seiner Aufweitung bewegt sich der Verbindungsring 14 auf der hinteren Nutflanke 16 der Nut 12 in der Aufnahme 8 für den Deckel 7 nach außen. Weil die Nutflanke 16 schräg ist, bewegt sich der Verbindungsring 14 zugleich axial tiefer in die Aufnahme 8. Weil die hintere Nutflanke 16 der Nut 12 in der Aufnahme 8 steiler als die ebenfalls schräge vordere Nutflanke 15 der Nut 11 außen im Deckel 7 ist, bewegt sich der Verbindungsring 14 bei seiner Aufweitung axial weiter gegenüber der Aufnahme 8 als gegenüber dem Deckel 7. Das erzeugt eine Bewegung des Deckels 7 tiefer in die Aufnahme 8 hinein bzw. beaufschlagt den Deckel 7 in die Aufnahme 8 hinein. Dadurch wird ein in axialer Richtung spielfreier Sitz des Deckels 7 in der Aufnahme 8 von Anfang an und bei drucklosem Sackloch 2 erreicht.

Die Nut 12 in der Aufnahme 8 so tief, dass der Verbindungsring 14 bei allen Toleranzen der Aufnahme 8 einschließlich ihres Tiefenanschlags 6, des Deckels 7 im Bereich der Befestigung und der Lochscheibe 10 ausreichend Radialspiel nach außen aufweist, dass er durch eine Axialbeaufschlagung des Deckels 7 so weit aufgespreizt wird, dass er den Deckel 7 ohne Axialspiel gegen die Lochscheibe 14 und die Lochscheibe 14 gegen die den Tiefenanschlag 6 der Aufnahme 8 bildende Ringstufe drückt.

Eine Druckbeaufschlagung bzw. allgemein eine Beaufschlagung im Sinne eines Lösens des Deckels 7 aus der Aufnahme 8 verstärkt den Effekt: eine axial aus der Aufnahme 8 heraus wirkende, am Deckel 7 angreifende Kraft drückt den Verbindungsring 14 über die schräge vordere Nutflanke 15 der Nut 11 außen im Deckel 7 stärker nach außen und gegen die ebenfalls schräge hintere Nutflanke 16 der Nut 12 in der Aufnahme 8, die, weil sie steiler ist, den Deckel 7 stärker axial in die Aufnahme 8 hinein beaufschlagt. Der axial spielfreie Sitz des Deckels 7 in der Aufnahme 8 des Gehäuses 3 bzw. des Hydraulikblocks 1 ist bei beliebigem Druck gewährleistet.

Der Deckel 7 klemmt die Lochscheibe 10 spielfrei zwischen seinem vorderen Stirnrand 9 und der den Tiefenanschlag 6 bildenden Ringstufe fest. Auch bei einer Ausführung der erfindungsgemäßen Kombination ohne die Lochscheibe 10 zwischen dem Deckel 7 und dem Tiefenanschlag 6 würde der Deckel 7 ohne Axialspiel unmittelbar an dem Tiefenanschlag 6 anliegen.

Rundungen an Übergängen der Nutflanken 11, 12, 15, 16 zu Nutgründen der beiden Nuten 11, 12 weisen einen mindestens so großen Radius wie der Ringquerschnitt des Verbindungsrings 14 auf, so dass der Verbindungsring 14 nicht von den Nutflanken 11, 12, 15, 16 abgehoben wird.

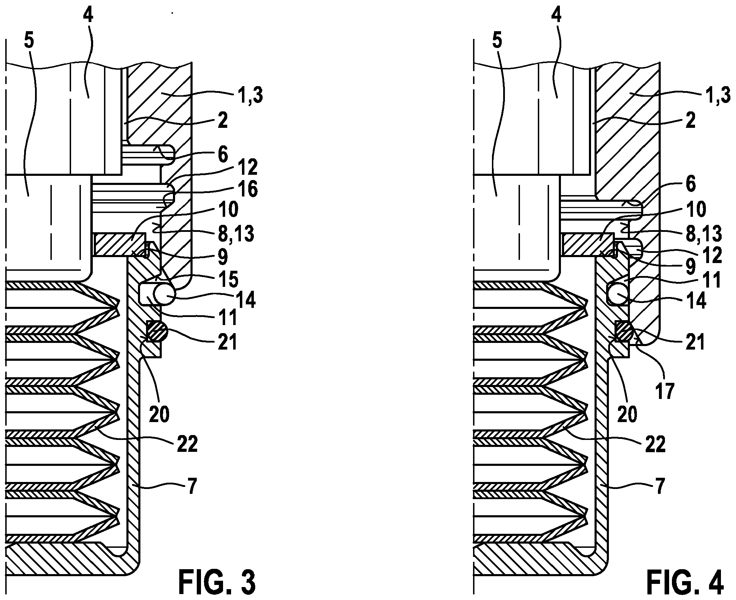

Zur Herstellung der erfindungsgemäßen Kombination wird der Deckel 7 in der Einbringrichtung, nämlich axial in die Aufnahme 8 des das Gehäuse 3 bildenden Hydraulikblocks 1 bewegt, bis der vordere Stirnwand 9 des Deckels 7 an der Lochscheibe 10 und die Lochscheibe 10 an dem Tiefenanschlag 6 der Aufnahme 8 anliegt. Diese Bewegung kann auch als Stecken des Deckels 7 in die Aufnahme 8 des Gehäuses 3 aufgefasst werden. Beim Einbringen des Deckels 7 in die Aufnahme 8 befindet sich der Verbindungsring 14 in der Nut 11 des Deckels 7. Er gelangt, wie in Figur 3 zu sehen, in Anlage an eine Einführschräge 17, von der er zusammen gedrückt wird, bis sein Außendurchmesser so groß wie ein Durchmesser der Innenumfangswand 13 der Aufnahme 8 ist, wodurch der Verbindungsring 14 in die Aufnahme 8 geschoben werden kann. Die Einführschräge 17 ist eine Fase, das heißt eine kegelstumpfförmige Fläche an einem Übergang von der Aufnahme 8 zu einer Außenfläche des Hydraulikblocks 1.

Die umlaufende Nut 11 außen im Deckel 7 ist mindestens so tief wie der Durchmesser des Ringquerschnitts des Verbindungsrings 14. Weist der Verbindungsring 14 einen anderen als einen kreisförmigen Ringquerschnitt auf, ist die Nut 11 außen im Deckel 7 mindestens so tief wie eine Breite des Ringquerschnitts des Verbindungsrings 14 in radialer Richtung. Dadurch lässt sich der Verbindungsring 14 vollständig in der Nut 11 im Deckel 7 versenken, so dass er in die Aufnahme 8 in dem das Gehäuse 3 bildenden Hydraulikblock 1 geschoben werden kann.

Es ist auch möglich, den Verbindungsring 14 zur Herstellung der erfindungsgemäßen Kombination in die Nut 12 in der Innenumfangswand 13 der Aufnahme 8 anzuordnen. In diesem Fall ist die Einführschräge am vorderen Stirnrand 9 des Deckels 7 angeordnet und die Nut 12 in der Innenumfangswand 13 der Aufnahme 8 ist mindestens so tief, wie der Durchmesser bzw. die Breite des Ringquerschnitt des Verbindungsrings 14 (nicht dargestellt), so dass die Einführschräge in diesem Fall des Deckels 7 den Verbindungsring 14 in die Nut 12 in der Innenumfangswand 13 der Aufnahme 8 drückt und der Deckel 7 in den Verbindungsring 14 in der Nut 12 in der Innenumfangswand 13 der Aufnahme 8 geschoben werden kann.

Erreichen beim Einbringen des Deckels 7 in die Aufnahme 8 die Nuten 11, 12 des Deckels 7 und der Aufnahme 8 einander, federt der Verbindungsring 14 auf, so dass er in beide Nuten 11, 12 ragt und den Deckel 7 in der Aufnahme 8 befestigt und damit mit dem das Gehäuse 3 bildenden Hydraulikblock 1 verbindet.

Eine in der Einbringrichtung hintere Nutflanke 18 der Nut 11 des Deckels 7 ist eine Radialfläche, das heißt sie verläuft senkrecht zur Einbringrichtung, damit sie beim Einbringen des Deckels 7 in die Aufnahme 8 den Verbindungsring 14 in die Aufnahme 8 schiebt. Eine in der Einbringrichtung vordere Nutflanke 19 der Nut 12 in der Innenumfangswand 13 der Aufnahme 8 ist ebenfalls eine senkrecht zur Einbringrichtung verlaufende Radialfläche.

Auf einer dem vorderen Stirnrand 9 des Deckels 7 abgewandten Seite der Nut 11 weist der Deckel 7 außen eine weitere umlaufende Nut auf, die hier als Dichtnut 20 bezeichnet wird. In der Dichtnut 20 ist ein Dichtring 21 angeordnet, der zwischen dem Deckel 7 und der Aufnahme 8 des das Gehäuse 3 bildenden Hydraulikblocks 1 abdichtet. In der dargestellten und beschriebenen Ausführungsform ist der Dichtring 21 ein O-Ring, es können allerdings auch andere Dichtringe wie ein Quadring oder ein Ring mit quadratischem- oder rechteckigen Ringquerschnitt verwendet werden. Wie in Figur 4 zu sehen wird der Dichtring 21 beim Einbringen des Deckels 7 in die Aufnahme 8 von der Einführschräge 17 in die Dichtnut 20 gedrückt, so dass er in dichtende Anlage an der Innenumfangswand 13 der Aufnahme 8 gelangt.

Die Innenumfangswand 13 der Aufnahme 8 ist zylindrisch und koaxial zum Sackloch 2 im Hydraulikblock 1 und zum Deckel 7. Die Innenumfangswand 13 verläuft also in der Einbringrichtung des Deckels 7 in die Aufnahme 8.

Der Hydraulikblock 1 ist ein quaderförmiger Metallblock aus einer Aluminiumlegierung, wobei eine Herstellung aus Metall nicht zwingend für die Erfindung ist. Der Hydraulikblock 1 dient einer mechanischen Befestigung und hydraulischen Verschaltung von Bauelementen der Bremsdruckregelung der nicht dargestellten hydraulischen Fahrzeugbremsanlage. Die Bremsdruckregelung kann eine Regelung eines hydraulischen Bremsdrucks einschließlich der Erzeugung des hydraulischen Bremsdrucks bei einer Fremdkraftbremsung und/oder eine Schlupfregelung sein, wobei zur Schlupfregelung Radbremsdrücke vorzugsweise einzelne in hydraulischen Radbremsen geregelt werden. Schlupfregelungen sind eine Blockierschutzregelung, eine Antriebsschlupfregelung und eine Fahrdynamikregelung, die auch als elektronisches Stabilitätsprogramm und umgangssprachlich als Schleuderschutzregelung bezeichnet wird. Für diese Regelungen sind die Abkürzungen ABS, ASR und FDR bzw. ESP gebräuchlich. Solche Bremsdruckregelungen sind bekannt und werden hier nicht erläutert.

Hydraulische Bauelemente der Bremsdruckregelung sind unter anderem Magnetventile, Rückschlagventile, Hydropumpen, Hydrospeicher, Dämpferkammern, Pedalwegsimulatoren und Drucksensoren. Die Aufzählung ist nicht zwingend vollständig. Bestückt mit den Bauelementen bildet der Hydraulikblock ein Hydraulikaggregat der Bremsdruckregelung der im Übrigen nicht dargestellten hydraulischen Fahrzeugbremsanlage.

"Hydraulische Verschaltung" bedeutet eine hydraulische Verbindung der Bauelemente entsprechend einem hydraulischen Schaltplan der Bremsdruckregelung.

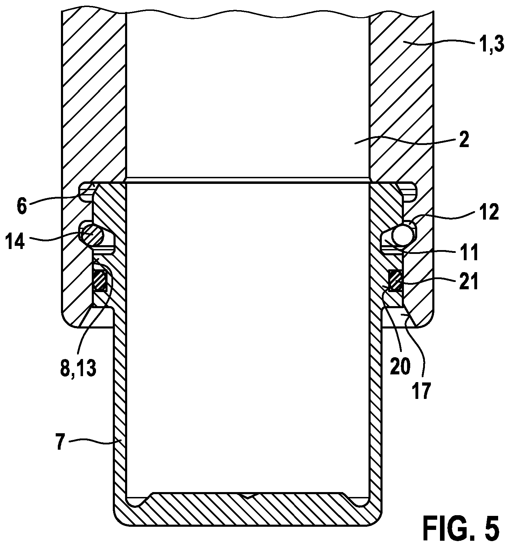

Die erfindungsgemäße Kombination ist nicht nur für den Deckel 7 des Pedalwegsimulators möglich, sondern ermöglicht grundsätzlich die Befestigung eines beliebigen Deckels 7 oder allgemein eines Bauteils in der Aufnahme 7 des Hydraulikblocks 1, des Gehäuses 3 oder allgemein eines beliebigen anderen Bauteils. Figur 5 zeigt einen Figur 1 entsprechenden Achsschnitt einer Ausführungsform der Erfindung ohne den Kolben 4, die Lochscheibe 10 und das Tellerfederpaket 22. Der Deckel 7 ist wie vorstehend zu Figuren 1 und 2 erläutert mit dem Verbindungsring 14 in der Aufnahme 8 des Gehäuses 3 oder Hydraulikblocks 1 befestigt. Der Deckel 7 wird bei dieser Ausführung der Erfindung nicht mechanisch vom Tellerfederpaket 22 oder bei Anlage des Kolbens 4 an der Lochscheibe 10 mechanisch von der Lochscheibe 10, sondern hydraulisch von einem in dem Sackloch 2, das der Deckel 7 verschließt, und im Deckel 7 herrschenden hydraulischen Druck beaufschlagt. Der Verbindungsring 14 hält wie zu Figuren 1 und 2 erläutert den Deckel 7 gegen den in ihm herrschenden hydraulischen Druck axial spielfrei in der Aufnahme 8 des das Gehäuse 3 bildenden Hydraulikblocks 1.

Der Stirnrand 9 am offenen Ende des Deckels 7 aus Figur 5 weist keine Ringstufe für die Lochscheibe 10 auf, die es in Figur 5 nicht gibt, sondern der Stirnrand 9 des Deckels 7 liegt unmittelbar an der den Tiefenanschlag 6 bildenden Ringstufe in der Aufnahme 8 für den Deckel 7 an. Wie erläutert, drückt der Verbindungsring 14 bei einer hydraulischen Druckbeaufschlagung des Deckels 7 von innen den Deckel 7 ohne Axialspiel mit dem Stirnrand 9 gegen die den Tiefenanschlag 6 bildende Ringstufe in der Aufnahme 8.

## Patentansprüche

1. Kombination eines Deckels (7) und eines Gehäuses (3), wobei zur Befestigung des Deckels (7) an dem Gehäuse (3) das Gehäuse (3) eine Vertiefung als Aufnahme (8) für den Deckel (7) aufweist, in die der Deckel (7) in einer Einbringrichtung eingebracht ist, wobei eine Innenumfangswand (13) der die Aufnahme (8) bildenden Vertiefung des Gehäuses (3) in der Einbringrichtung verläuft, wobei der Deckel (7) außen und die Aufnahme (8) in der Innenumfangswand (13) je eine umlaufende Nut (11, 12) aufweisen, in denen ein in radialer Richtung federnder Verbindungsring (14) einliegt, der nach innen in die umlaufende Nut (11) des Deckels (7) und nach außen in die umlaufende Nut (12) in der Innenumfangswand (13) der Aufnahme (8) des Gehäuses (3) für den Deckel (7) ragt und dadurch den Deckel (7) mit dem Gehäuse (3) verbindet, **dadurch gekennzeichnet, dass** eine in der Einbringrichtung vordere Nutflanke (15) der Nut (11) des Deckels (7) und eine in der Einbringrichtung hintere Nutflanke (16) der Nut (12) in der Innenumfangswand (13) der Aufnahme (8) des Gehäuses (3) für den Deckel (7) von innen nach außen schräg zu irr der Einbringrichtung verlaufen, wobei die in der Einbringrichtung vordere Nutflanke (15) der Nut (11) des Deckels (7) einen stumpferen Kegelwinkel aufweist als die in der Einbringrichtung hintere Nutflanke (16) der Nut (12) in der Innenumfangswand (13) der Aufnahme (8) des Gehäuses (3) für den Deckel (7).

2. Kombination nach Anspruch 1, **dadurch gekennzeichnet, dass** die Aufnahme (8) des Gehäuses (3) für den Deckel (7) einen Tiefenanschlag (6) aufweist, der eine Einbringtiefe des Deckels (7) in die Aufnahme (8) des Gehäuses (3) begrenzt.

3. Kombination nach Anspruch 2, **dadurch gekennzeichnet, dass** die Aufnahme (8) des Gehäuses (3) eine von ihrer Innenumfangswand (14) nach innen stehende Stufe als Tiefenanschlag (6) für den Deckel (7) aufweist.

4. Kombination nach einem oder mehreren der vorhergehenden Ansprüche, **dadurch gekennzeichnet, dass** eine in der Einbringrichtung hintere Nutflanke (18) der Nut (11) des Deckels (7) und/oder eine in der Einbringrichtung vordere Nutflanke (19) der Nut (12) in der Innenumfangswand (13) der Aufnahme (8) des Gehäuses (3) für den Deckel (7) senkrecht zur Einbringrichtung verlaufen.

5. Kombination nach einem oder mehreren der vorhergehenden Ansprüche, **dadurch gekennzeichnet, dass** der in radialer Richtung federnde Verbindungsring (14) an einer Umfangsstelle offen ist und/oder einen runden Ringquerschnitt aufweist.

6. Kombination nach einem oder mehreren der vorhergehenden Ansprüche, **dadurch gekennzeichnet, dass** der Deckel (7) außen und/oder die Aufnahme (8) des Gehäuses (3) für den Deckel (7) eine Dichtnut (20) aufweist, in der ein Dichtring (21) angeordnet ist.

7. Kombination nach einem oder mehreren der vorhergehenden Ansprüche, **dadurch gekennzeichnet, dass** die Nut (11) außen am Deckel (7) und/oder die Nut (12) in der Innenumfangswand (13) der Aufnahme (8) des Gehäuses (3) für den Deckel (7) mindestens so tief wie ein Ringquerschnitt des Verbindungsrings (14) in radialer Richtung breit ist, so dass sich der Verbindungsring (14) in der Nut (7, 8) versenken lässt.

8. Kombination nach einem oder mehreren der vorhergehenden Ansprüche, **dadurch gekennzeichnet, dass** der Deckel (7) an einem Übergang von einem in der Einbringrichtung vorderen Stirnrand (9) zu einem Außenumfang und/oder die Aufnahme (8) des Gehäuses (3) für den Deckel (7) an einer Mündung der Aufnahme (8) eine Einführschräge (17) aufweist, die den Verbindungsring (14) beim Einbringen des Deckels (7) in die Aufnahme (8) des Gehäuses (3) in die Nut (11) des Deckels (7) oder in die Nut (12) in der Innenumfangswand (13) der Aufnahme (8) drückt.

9. Kombination nach einem oder mehreren der vorhergehenden Ansprüche, **dadurch gekennzeichnet, dass** das Gehäuse (3) ein Hydraulikblock (1) einer Bremsdruckregelung einer hydraulischen Fahrzeugbremsanlage ist.

## Claims

1. Combination of a cover (7) and a housing (3), wherein, for fastening of the cover (7) to the housing (3), the housing (3) has a depression as a receptacle (8) for the cover (7), into which the cover (7) is introduced in a direction of introduction, wherein an inner circumferential wall (13) of the depression of the housing (3) that forms the receptacle (8) extends in the direction of introduction, wherein the cover (7), at the outside, and the receptacle (8), in the inner circumferential wall (13), have a respective encircling groove (11, 12), in which grooves there lies a radially resilient connecting ring (14) which projects inwards into the encircling groove (11) of the cover (7) and outwards into the encircling groove (12) in the inner circumferential wall (13) of the receptacle (8) of the housing (3) for the cover (7) and as a result connects the cover (7) to the housing (3), **characterized in that** a front groove flank (15) in the direction of introduction of the groove (11) of the cover (7) and a rear groove flank (16) in the direction of introduction of the groove (12) in the inner circumferential wall (13) of the receptacle (8) of the housing (3) for the cover (7) extend from the inside outwards obliquely in relation to the direction of introduction, wherein the front groove flank (15) in the direction of introduction of the groove (11) of the cover (7) has a larger cone angle than the rear groove flank (16) in the direction of introduction of the groove (12) in the inner circumferential wall (13) of the receptacle (8) of the housing (3) for the cover (7).

2. Combination according to Claim 1, **characterized in that** the receptacle (8) of the housing (3) for the cover (7) has a depth stop (6) which limits a depth of introduction of the cover (7) into the receptacle (8) of the housing (3).

3. Combination according to Claim 2, **characterized in that** the receptacle (8) of the housing (3) has, as a depth stop (6) for the cover (7), a step projecting inwards from its inner circumferential wall (14).

4. Combination according to one or more of the preceding claims, **characterized in that** a rear groove flank (18) in the direction of introduction of the groove (11) of the cover (7) and/or a front groove flank (19) in the direction of introduction of the groove (12) in the inner circumferential wall (13) of the receptacle (8) of the housing (3) for the cover (7) extend(s) perpendicularly to the direction of introduction.

5. Combination according to one or more of the preceding claims, **characterized in that** the radially resilient connecting ring (14) is open at a circumferential position and/or has a round ring cross section.

6. Combination according to one or more of the preceding claims, **characterized in that** the cover (7), at the outside, and/or the receptacle (8) of the housing (3) for the cover (7) have/has a sealing groove (20) in which a sealing ring (21) is arranged.

7. Combination according to one or more of the preceding claims, **characterized in that** the depth of the groove (11) on the outside of the cover (7) and/or the depth of the groove (12) in the inner circumferential wall (13) of the receptacle (8) of the housing (3) for the cover (7) are/is at least equal to a radial width of a ring cross section of the connecting ring (14), so that the connecting ring (14) can be sunk into the groove (7, 8).

8. Combination according to one or more of the preceding claims, **characterized in that** the cover (7), at a transition from a front end edge (9) in the direction of introduction to an outer circumference, and/or the receptacle (8) of the housing (3) for the cover (7), at a mouth of the receptacle (8), have/has an introduction bevel (17) which, during the introduction of the cover (7) into the receptacle (8) of the housing (3), pushes the connecting ring (14) into the groove (11) of the cover (7) or into the groove (12) in the inner circumferential wall (13) of the receptacle (8).

9. Combination according to one or more of the preceding claims, **characterized in that** the housing (3) is a hydraulic block (1) of a brake pressure control system of a hydraulic vehicle brake system.

## Revendications

1. Combinaison d'un couvercle (7) et d'un boîtier (3) ; pour la fixation du couvercle (7) sur le boîtier (3), le boîtier (3) présentant un renfoncement en tant que logement (8) pour le couvercle (7), dans lequel le couvercle (7) est introduit dans une direction d'introduction, une paroi périphérique intérieure (13) du renfoncement du boîtier (3) formant le logement (8) s'étendant dans la direction d'introduction, le couvercle (7) à l'extérieur et le logement (8) dans la paroi périphérique intérieure (13) présentant chacun une rainure circonférentielle (11, 12) dans laquelle est insérée une bague de liaison (14) élastique dans la direction radiale, qui dépasse vers l'intérieur dans la rainure circonférentielle (11) du couvercle (7) et vers l'extérieur dans la rainure circonférentielle (12) dans la paroi périphérique intérieure (13) du logement (8) du boîtier (3) pour le couvercle (7) et relie ainsi le couvercle (7) au boîtier (3), **caractérisée en ce qu'**un flanc de rainure avant (15) de la rainure (11) du couvercle (7) dans la direction d'introduction et un flanc de rainure arrière (16) de la rainure (12) dans la paroi périphérique intérieure (13) du logement (8) du boîtier (3) pour le couvercle (7) dans la direction d'introduction s'étendent de l'intérieur vers l'extérieur en oblique par rapport à la direction d'introduction, le flanc de rainure avant (15) de la rainure (11) du couvercle (7) dans la direction d'introduction présentant un angle de cône plus obtus que le flanc de rainure arrière (16) de la rainure (12) dans la paroi périphérique intérieure (13) du logement (8) du boîtier (3) pour le couvercle (7) dans la direction d'introduction.

2. Combinaison selon la revendication 1, **caractérisée en ce que** le logement (8) du boîtier (3) pour le couvercle (7) présente une butée de profondeur (6) qui limite une profondeur de pénétration du couvercle (7) dans le logement (8) du boîtier (3).

3. Combinaison selon la revendication 2, **caractérisée en ce que** le logement (8) du boîtier (3) présente, en tant que butée de profondeur (6) pour le couvercle (7), un gradin faisant saillie vers l'intérieur depuis sa paroi périphérique intérieure (14).

4. Combinaison selon une ou plusieurs des revendications précédentes, **caractérisée en ce qu'**un flanc de rainure arrière (18) de la rainure (11) du couvercle (7) dans la direction d'introduction et/ou un flanc de rainure avant (19) de la rainure (12) dans la paroi périphérique intérieure (13) du logement (8) du boîtier (3) pour le couvercle (7) dans la direction d'introduction s'étendent perpendiculairement à la direction d'introduction.

5. Combinaison selon une ou plusieurs des revendications précédentes, **caractérisée en ce que** la bague de liaison (14) élastique dans la direction radiale est ouverte en un point périphérique et/ou présente une section transversale annulaire ronde.

6. Combinaison selon une ou plusieurs des revendications précédentes, **caractérisée en ce que** le couvercle (7) présente à l'extérieur et/ou le logement (8) du boîtier (3) pour le couvercle (7) une rainure d'étanchéité (20) dans laquelle est agencée une bague d'étanchéité (21).

7. Combinaison selon une ou plusieurs des revendications précédentes, **caractérisée en ce que** la rainure (11) à l'extérieur du couvercle (7) et/ou la rainure (12) dans la paroi périphérique intérieure (13) du logement (8) du boîtier (3) pour le couvercle (7) est au moins aussi profonde qu'une section transversale annulaire de la bague de liaison (14) dans la direction radiale, de telle sorte que la bague de liaison (14) peut être enfoncée dans la rainure (7, 8).

8. Combinaison selon une ou plusieurs des revendications précédentes, **caractérisée en ce que** le couvercle (7) au niveau d'une transition entre un bord frontal (9) avant dans la direction d'introduction et une périphérie extérieure et/ou le logement (8) du boîtier (3) pour le couvercle (7) au niveau d'une embouchure du logement (8) présente un chanfrein d'insertion (17) qui, lors de l'introduction du couvercle (7) dans le logement (8) du boîtier (3), pousse la bague de liaison (14) dans la rainure (11) du couvercle (7) ou dans la rainure (12) dans la paroi périphérique intérieure (13) du logement (8).

9. Combinaison selon une ou plusieurs des revendications précédentes, **caractérisée en ce que** le boîtier (3) est un bloc hydraulique (1) d'une régulation de pression de freinage d'un système de freinage hydraulique de véhicule.
